# EUROPEAN PATENT APPLICATION

(11) **EP 4 661 157 A1**
(43) Date of publication of application: **10.12.2025**
(21) Application number: 25180685.7
(22) Date of filing: 04.06.2025
(51) Int. Cl.: H01M 10/44, H02J 7/00

(54) **CELL BALANCING DEVICE AND METHOD**

(30) Priority: 05.06.2024 CN 202410725060
(71) Applicant: Xiamen Ampack Technology Limited, Xiamen City, Fujian Province, 361000 (CN)
(72) Inventor: TU, Wei, Xiamen City, Fujian Province, China, 361000 (CN); CHEN, Yingjie, Xiamen City, Fujian Province, China, 361000 (CN); HE, Guoda, Xiamen City, Fujian Province, China, 361000 (CN)
(74) Representative: Icosa

(57) **Abstract**

This application discloses a cell balancing device and method. The method includes: obtaining a first minimum cell voltage value and a first maximum cell voltage value of a to-be-balanced battery module in a latest full-charging operation; determining a first charge capacity of a first target cell in the battery module in a corresponding first time period in response to a first charging operation performed by the battery module; and updating a balancing capacity of the first target cell based on the first charge capacity. The first target cell is a cell with a voltage value greater than or equal to the first minimum cell voltage value. The first time period corresponding to the first target cell is a period of time that begins when the voltage value of the first target cell reaches the first minimum cell voltage value for a first time and that ends when the first charging operation of the battery module is ended.

## Description

### TECHNICAL FIELD

This application relates to the technical field of battery management, and in particular, to a cell balancing device and method.

### BACKGROUND

A battery module is typically formed of a plurality of cells connected in series. When the battery module is used over time, the differences between the cells in the battery module gradually increase, resulting in low consistency between the cells. Due to the short board effect of the battery module, the inconsistency between the cells causes the battery module to incur problems such as rapid capacity fading, a short lifespan, and an increased internal resistance during use. Consequently, the capacity of the battery fails to be fully leveraged, and the available capacity of the battery is reduced. Therefore, effective balancing management for the battery module can improve the consistency between the cells in the battery module, reduce the loss of available capacity of the battery module, and prolong the service life of the battery module, and is of great significance.

### SUMMARY

In the existing related balancing technology, balancing is typically activated when the voltage difference between the maximum cell with the highest voltage and the minimum cell with the lowest voltage in the battery module is greater than a voltage difference threshold at the end of a charging stage or at a static standing stage of the battery module. After the balancing is activated, the voltage difference between a cell and the minimum cell is used as a balancing amount to perform a balancing operation on the battery module. In this conventional method, an instantaneous voltage difference is used as a basis for determining whether to activate balancing, thereby incurring the defects such as a slow balancing speed and erroneous balancing. An embodiment of this application provides a cell balancing device and method to improve the cell balancing speed and reduce erroneous balancing. In this application, unless otherwise expressly specified, the term "maximum cell" means the cell with the maximum voltage in a battery module, and the term "minimum cell" means the cell with the minimum voltage in the battery module.

According to a first aspect, an embodiment of this application provides a cell balancing device, including a processing unit, configured to perform a first operation. The first operation includes: obtaining a first minimum cell voltage value of a to-be-balanced battery module in a latest full-charging operation, where the battery module includes a plurality of cells; determining a first charge capacity of a first target cell in the battery module in a corresponding first time period in response to a first charging operation performed by the battery module; and updating a balancing capacity of the first target cell based on the first charge capacity. The first target cell is a cell with a voltage value greater than or equal to the first minimum cell voltage value when the battery module performs the first charging operation. The first time period corresponding to the first target cell is a period of time that begins when the voltage value of the first target cell reaches or exceeds the first minimum cell voltage value for a first time and that ends when the first charging operation of the battery module is ended, as counted throughout the first charging operation performed by the battery module.

In this way, based on the charge capacity of the cell to be balanced in the battery module, the balancing capacity of the cell to be balanced is updated, thereby determining a more accurate balancing capacity of the cell to be balanced. When balancing is performed based on said balancing capacity, erroneous balancing can be reduced. Moreover, the balancing capacity of the cell to be balanced can be determined under the charging condition and the static standing condition of the battery module. Therefore, the balancing time is no longer limited to the end of a charging stage and the static standing stage. In addition, the balancing is performed when the maximum cell voltage difference meets the specified condition, thereby increasing the balancing time and the balancing speed.

In one or more embodiments of this application, conditions for ending the first charging operation include at least one of: an electrical connection between the battery module and a charging device is disconnected; the battery module reaches a charging cut-off SOC; or, the minimum cell voltage value of the battery module in the first charging operation is greater than or equal to the first minimum cell voltage value.

Here, the processing unit controls the ending of the first charging operation based on the conditions for ending the first charging operation. In this way, the voltage value of the minimum cell of the battery module in the first charging operation is prevented from being greater than the first minimum cell voltage value. Therefore, erroneous balancing can be reduced by using the cell with a voltage value greater than or equal to the first minimum cell voltage value as the first target cell to be balanced.

In one or more embodiments of this application, the processing unit is configured to perform a second operation before performing the first operation. The second operation includes: evaluating the number of consecutive times a charging cut-off SOC is less than or equal to a first SOC threshold, and determining whether the number of consecutive times is less than M in last N historical charging operations of the battery module; and performing, by the processing unit, the first operation in response to the number of consecutive times being less than M. Both M and N are positive integers, and M is less than or equal to N.

Here, in the historical charging operations of the battery module, when the number of consecutive times the charging cut-off SOC is less than or equal to the first SOC threshold is less than M, it is considered that the battery module does not incur the phenomenon that the battery module fails to be charged to the specified SOC value for a plurality of consecutive times under the charging condition. When the battery module is charged to a relatively high SOC value, the balancing capacity of the cell to be balanced in the battery module is calculated based on the first operation, thereby improving the calculation precision of the balancing capacity. The cell in the battery module is balanced based on the determined balancing capacity, thereby reducing erroneous balancing.

In one or more embodiments of this application, the processing unit is configured to: perform the first operation in response to a condition that the number of consecutive times is greater than or equal to M and a condition that a SOC value of the battery module in a current charging operation is greater than or equal to the first SOC threshold.

Here, when the SOC value of the battery module in the current charging operation is greater than the first SOC threshold, it indicates that the SOC value of the battery module in the current charging operation exceeds the specified SOC value. When the battery module is charged to a relatively high SOC value, the balancing capacity of the cell to be balanced in the battery module is calculated based on the first operation, thereby improving the calculation precision of the balancing capacity. The cell in the battery module is balanced based on the determined balancing capacity, thereby reducing erroneous balancing.

In one or more embodiments of this application, the processing unit is configured to: perform a third operation in response to a condition that the number of consecutive times is greater than or equal to M, and a condition that a cut-off SOC value of the battery module in a current charging operation is less than or equal to the first SOC threshold, and a condition that the battery module is in a static standing state. The third operation includes: obtaining an open-circuit voltage value of a minimum cell and an open-circuit voltage value of a remaining cell in the battery module; and calculating a balancing capacity of the remaining cell based on a SOC-OCV function, the open-circuit voltage value of the minimum cell, and the open-circuit voltage value of the remaining cell, so as to obtain an updated balancing capacity of the remaining cell. The minimum cell is a cell with a lowest voltage in the battery module, and the remaining cell is a cell other than the minimum cell in the battery module.

Here, in the historical charging operations of the battery module, when the number of consecutive times the charging cut-off SOC is less than or equal to the first SOC threshold is greater than or equal to than M, and when the SOC value of the battery module in the current charging operation is less than or equal to the first SOC threshold, it is considered that the battery module incurs the phenomenon that the battery module fails to be charged to the specified SOC value for a plurality of consecutive times during the charging. When the battery module is under a static standing condition, the cell that needs to be balanced and the balancing capacity of the cell that needs to be balanced when the battery module is in a static standing state can be obtained based on the SOC-OCV function. Balancing the cell that needs to be balanced in the battery module based on the determined balancing capacity can improve the consistency of the cells when the SOC value of the battery module is at a low level, thereby reducing the adverse effect caused by the inconsistency of cells to the battery module and improving the quality of the battery module.

In one or more embodiments of this application, the processing unit is configured to: perform a fourth operation in response to a condition that the number of consecutive times is greater than or equal to M, and a condition that a cut-off SOC value of the battery module in a current charging operation is less than or equal to the first SOC threshold, and a condition that the battery module is in a charging state, and a condition that a fluctuation of a charging rate of the battery module is less than a fluctuation threshold. The fourth operation includes: obtaining a second maximum cell voltage value of the battery module before the current charging operation; determining a second charge capacity of a second target cell in the battery module in a corresponding second time period in response to a second charging operation performed by the battery module; and updating a balancing capacity of the second target cell based on the second charge capacity. The second target cell is a cell with a voltage value greater than or equal to the second maximum cell voltage value when the battery module performs the second charging operation. The second time period corresponding to the second target cell is a period of time that begins when the voltage value of the second target cell reaches or exceeds the second maximum cell voltage value for a first time and that ends when the second charging operation of the battery module is ended, as counted throughout the second charging operation performed by the battery module.

Here, in the historical charging operations of the battery module, when the number of consecutive times the charging cut-off SOC value is less than or equal to the first SOC threshold is greater than or equal to than M, and when the SOC value of the battery module in the current charging operation is less than or equal to the first SOC threshold, it is considered that the battery module incurs the phenomenon that the battery module fails to be charged to the specified SOC value for a plurality of consecutive times during the charging. In this case, when the battery module is in a charging condition, the balancing capacity of the cell to be balanced is updated based on the charge capacity of the cell to be balanced in the battery module, thereby determining the more accurate balancing capacity of the cell to be balanced. Balancing is performed based on said balancing capacity, thereby reducing erroneous balancing, improving the consistency of the cells in the battery module at a low SOC, and improving the quality of the battery module.

In one or more embodiments of this application, conditions for ending the second charging operation include at least one of: an electrical connection between the battery module and a charging device is disconnected; or the minimum cell voltage value of the battery module in the second charging operation is greater than or equal to the second maximum cell voltage value.

In one or more embodiments of this application, the cell balancing device includes: a plurality of balancing units, where the number of balancing units corresponds to the number of cells in the battery module, and each balancing unit includes a resistor and a switch connected in series. The balancing unit is disposed on the processing unit, or, the balancing unit is electrically connected between the cell of the battery module and the processing unit. The processing unit is configured to perform a fifth operation. The fifth operation includes: performing a balancing operation on each cell that needs to be balanced, where the balancing operation is performed when the battery module is in a target state, and is performed based on a balancing capacity of the cell that needs to be balanced in the battery module, and is performed in response to a condition that the cell that needs to be balanced in the battery module satisfies a balancing operation condition. The cell that needs to be balanced includes: the first target cell, the remaining cell in the battery module, or the second target cell in the battery module. The target state includes at least one of: a charging state, a discharging state, or a static standing state. The balancing operation includes: controlling a switch in a balancing unit to become turned on, where the balancing unit corresponds to the cell that needs to be balanced, and a resistor in the balancing unit consumes power of the cell that needs to step-down balancing.

Here, when the battery module is in a charging condition, a discharging condition, or a static standing condition, the processing unit determines that the cell meets the balancing operation condition, and further controls the switch to become turned on, so that the cell undergoes a balancing operation by discharging, thereby improving the consistency of the cells in the battery module, improving the quality of the battery module, and enabling the battery module to perform the balancing operation in a variety of operating conditions.

In one or more embodiments of this application, the fifth operation includes: updating, based on a balancing current and a balancing period of the balancing operation performed on the cell that needs to be balanced, a remaining balancing capacity of the cell that needs to be balanced.

Here, when a cell in the battery module are balanced, the remaining balancing capacity of the cell can be periodically calculated and updated until the remaining balancing capacity is 0, and then the balancing operation is terminated, thereby improving the effectiveness of the balancing process.

In one or more embodiments of this application, the balancing operation condition includes at least one of the following conditions: a temperature of the cell that needs to be balanced is less than a first temperature threshold; a temperature of a resistor in a balancing unit corresponding to the cell that needs to be balanced is less than a second temperature threshold; a voltage of the cell that needs to be balanced is greater than a voltage threshold; or, the remaining balancing capacity of the cell that needs to be balanced is greater than 0.

Here, an overtemperature cell can be prevented from being balanced, and an overtemperature resistor is prevented from being used for balancing the cell, thereby preventing the undervoltage of the balanced cell. In addition, the balancing process is terminated in time when the remaining balancing capacity or electrical capacity of the cell is 0, thereby reducing erroneous balancing for the cells and improving the cell balancing effect.

According to a second aspect, an embodiment of this application provides a cell balancing method. The method includes: obtaining a first minimum cell voltage value of a to-be-balanced battery module in the latest full-charging operation, where the battery module includes a plurality of cells; determining a first charge capacity of a first target cell in the battery module in a corresponding first time period in response to a first charging operation performed by the battery module; and updating a balancing capacity of the first target cell based on the first charge capacity. The first target cell is a cell with a voltage value greater than or equal to the first minimum cell voltage value when the battery module performs the first charging operation. The first time period corresponding to the first target cell is a period of time that begins when the voltage value of the first target cell reaches or exceeds the first minimum cell voltage value for a first time and that ends when the first charging operation of the battery module is ended, as counted throughout the first charging operation performed by the battery module.

In this way, based on the charge capacity of the cell to be balanced in the battery module, the balancing capacity of the cell to be balanced is updated, thereby determining a more accurate balancing capacity of the cell to be balanced. When balancing is performed based on said balancing capacity, erroneous balancing can be reduced. Moreover, the balancing capacity of the cell to be balanced can be determined under the charging condition and the static standing condition of the battery module. Therefore, the balancing time is no longer limited to the end of a charging stage and the static standing stage. In addition, the balancing is performed when the maximum cell voltage difference meets the specified condition, thereby increasing the balancing time and the balancing speed.

In one or more embodiments of this application, before obtaining the first minimum cell voltage value of the to-be-balanced battery module in the latest full-charging operation, the method includes: evaluating the number of consecutive times a charging cut-off SOC is less than or equal to a first SOC threshold, and determining whether the number of consecutive times is less than M in last N historical charging operations of the battery module. The obtaining the first minimum cell voltage value of the to-be-balanced battery module in the latest full-charging operation includes: obtaining, in response to the number of consecutive times being less than M, the first minimum cell voltage value of the to-be-balanced battery module in the latest full-charging operation, where both M and N are positive integers, and M is less than or equal to N.

Here, in the historical charging operations of the battery module, when the number of consecutive times the charging cut-off SOC is less than or equal to the first SOC threshold is less than M, it is considered that the battery module does not incur the phenomenon that the battery module fails to be charged to the specified SOC value for a plurality of consecutive times under the charging condition. When the battery module is charged to a relatively high SOC value, the balancing capacity of the cell to be balanced in the battery module is calculated based on the first operation, thereby improving the calculation precision of the balancing capacity. The cell in the battery module is balanced based on the determined balancing capacity, thereby reducing erroneous balancing.

In one or more embodiments of this application, the obtaining the first minimum cell voltage value of the to-be-balanced battery module in the latest full-charging operation includes: obtaining, in response to a condition that the number of consecutive times is greater than or equal to M and a condition that a SOC value of the battery module in a current charging operation is greater than the first SOC threshold, the first minimum cell voltage value of the to-be-balanced battery module in the latest full-charging operation.

Here, when the SOC value of the battery module in the current charging operation is greater than the first SOC threshold, it is considered that the SOC value of the battery module exceeds the specified SOC value. When the battery module is charged to a relatively high SOC value, the balancing capacity of the cell to be balanced in the battery module is calculated based on the first operation, thereby improving the calculation precision of the balancing capacity. The cell in the battery module is balanced based on the determined balancing capacity, thereby reducing erroneous balancing.

In one or more embodiments of this application, the method includes: obtaining an open-circuit voltage value of a minimum cell and an open-circuit voltage value of a remaining cell in the battery module in response to a condition that the number of consecutive times is greater than or equal to M, and a condition that a SOC value of the battery module in a current charging operation is less than or equal to the first SOC threshold, and a condition that the battery module is in a static standing state; and calculating a balancing capacity of the remaining cell based on a SOC-OCV function, the open-circuit voltage value of the minimum cell, and the open-circuit voltage value of the remaining cell, so as to obtain an updated balancing capacity of the remaining cell. The minimum cell is a cell with a lowest voltage in the battery module, and the remaining cell is a cell other than the minimum cell in the battery module.

Here, in the historical charging operations of the battery module, when the number of consecutive times the charging cut-off SOC is less than or equal to the first SOC threshold is greater than or equal to than M, and when the SOC value of the battery module in the current charging operation is less than or equal to the first SOC threshold, it is considered that the battery module incurs the phenomenon that the battery module fails to be charged to the specified SOC value for a plurality of consecutive times during the charging. When the battery module is under a static standing condition, the cell that needs to be balanced and the balancing capacity of the cell that needs to be balanced when the battery module is in a static standing state can be obtained based on the SOC-OCV function. Balancing the cell that needs to be balanced in the battery module based on the determined balancing capacity can improve the consistency of the cells when the SOC value of the battery module is at a low level, thereby reducing the adverse effect caused by the inconsistency of cells to the battery module and improving the quality of the battery module.

In one or more embodiments of this application, the method includes: obtaining a second maximum cell voltage value of the battery module before a current charging operation in response to a condition that the number of consecutive times is greater than or equal to M, and a condition that a SOC value of the battery module in the current charging operation is less than or equal to the first SOC threshold, and a condition that the battery module is in a charging state, and a condition that a fluctuation of a charging rate of the battery module is less than a fluctuation threshold; determining a second charge capacity of a second target cell in the battery module in a corresponding second time period in response to a second charging operation performed by the battery module; and updating a balancing capacity of the second target cell based on the second charge capacity. The second target cell is a cell with a voltage value greater than or equal to the second maximum cell voltage value when the battery module performs the second charging operation. The second time period corresponding to the second target cell is a period of time that begins when the voltage value of the second target cell reaches or exceeds the second maximum cell voltage value for a first time and that ends when the second charging operation of the battery module is ended, as counted throughout the second charging operation performed by the battery module.

Here, in the historical charging operations of the battery module, when the number of consecutive times the charging cut-off SOC value is less than or equal to the first SOC threshold is greater than or equal to than M, and when the SOC value of the battery module in the current charging operation is less than or equal to the first SOC threshold, it is considered that the battery module incurs the phenomenon that the battery module fails to be charged to the specified SOC value for a plurality of consecutive times during the charging. In this case, when the battery module is in a charging condition, the balancing capacity of the cell to be balanced is updated based on the charge capacity of the cell to be balanced in the battery module, thereby determining the more accurate balancing capacity of the cell to be balanced. Balancing is performed based on said balancing capacity, thereby reducing erroneous balancing, improving the consistency of the cells in the battery module at a low SOC, and improving the quality of the battery module.

In one or more embodiments of this application, the method includes: performing a balancing operation on each cell that needs to be balanced, where the balancing operation is performed when the battery module is in a target state, and is performed based on a balancing capacity of the cell that needs to be balanced in the battery module, and is performed in response to a condition that the cell that needs to be balanced in the battery module satisfies a balancing operation condition. The cell that needs to be balanced includes: the first target cell, the remaining cell in the battery module, or the second target cell in the battery module. The target state includes at least one of: a charging state, a discharging state, or a static standing state. The balancing operation includes: controlling a switch in a balancing unit to become turned on, where the balancing unit corresponds to the cell that needs to be balanced, and a resistor in the balancing unit consumes power of the cell that needs to be balanced.

Here, when the battery module is in a charging condition, a discharging condition, or a static standing condition, the processing unit determines that the cell meets the balancing operation condition, and further performs a balancing operation on the cell, thereby improving the consistency of the cells in the battery module, improving the quality of the battery module, and enabling the battery module to perform the balancing operation in a variety of operating conditions.

In one or more embodiments of this application, the method includes: updating, for each cell that needs to be balanced, a remaining balancing capacity of the cell that needs to be balanced, where the update is performed based on a balancing current and a balancing period of the balancing operation performed on the cell that needs to be balanced, and the update is performed after the balancing operation is performed on the cell that needs to be balanced.

Here, when a cell in the battery module are balanced, the remaining balancing capacity of the cell can be periodically calculated and updated until the remaining balancing capacity is 0, and then the balancing operation is terminated, thereby improving the effectiveness of the balancing process.

In one or more embodiments of this application, the balancing operation condition includes at least one of the following conditions: a temperature of the cell that needs to be balanced is less than a first temperature threshold; a temperature of a resistor in a balancing unit corresponding to the cell that needs to be balanced is less than a second temperature threshold; a voltage of the cell that needs to be balanced is greater than a voltage threshold; or, the remaining balancing capacity of the cell that needs to be balanced is greater than 0.

Here, an overtemperature cell can be prevented from being balanced, and an overtemperature resistor is prevented from being used for balancing the cell, thereby preventing the undervoltage of the balanced cell. In addition, the balancing process is terminated in time when the remaining balancing capacity or electrical capacity of the cell is 0, thereby reducing erroneous balancing for the cells and improving the cell balancing effect.

### BRIEF DESCRIPTION OF DRAWINGS

To describe the technical solutions of the embodiments of this application more clearly, the following outlines the drawings to be used in the embodiments of this application.
FIG. 1 is a schematic diagram of a balancing time in a conventional cell balancing method;
FIG. 2 is a schematic diagram of variation of a voltage value of a cell in a battery module according to an embodiment of this application;
FIG. 3 is a close-up view of a balancing activation time period shown in FIG. 2 according to an embodiment of this application;
FIG. 4 is a schematic diagram of a cell balancing device according to an embodiment of this application;
FIG. 5 is a schematic diagram of variation of a voltage value of a cell in a battery module according to an embodiment of this application;
FIG. 6 is a close-up view of a first time period shown in FIG. 5 according to an embodiment of this application;
FIG. 7 is a schematic diagram of variation of a voltage value of a cell in a battery module according to an embodiment of this application;
FIG. 8 is a close-up view of a second time period shown in FIG. 7 according to an embodiment of this application;
FIG. 9 is a schematic diagram of a cell balancing device according to another embodiment of this application;
FIG. 10 is a schematic flowchart of a cell balancing method according to an embodiment of this application;
FIG. 11 is a schematic flowchart of a cell balancing method according to another embodiment of this application;
FIG. 12 is a schematic flowchart of a cell balancing method according to still another embodiment of this application; and
FIG. 13 is a schematic structural diagram of an electronic device according to an embodiment of this application.

### DETAILED DESCRIPTION

The following describes features and exemplary embodiments of each aspect of this application in detail. To make the objectives, technical solutions, and advantages of this application clearer, the following describes this application in further detail with reference to accompanying drawings and specific embodiments. Understandably, the examples herein are used for better understanding of this application. The specific embodiments described herein are merely intended to explain this application, but not to limit this application.

Understandably, the relational terms herein such as first and second are used merely to differentiate one entity or operation from another, but do not necessarily require or imply any actual relationship or sequence between the entities or operations.

In a conventional cell balancing method, the cells are typically balanced based on an instantaneous voltage difference when the battery module is at the end of a charging stage or in a static standing condition and when the voltage values of all cells in the battery module are greater than or equal to a voltage threshold. In this method, the balancing is typically activated when the voltage difference between the voltage of the maximum cell and the voltage of the minimum cell is greater than or equal to a voltage difference threshold, and is deactivated when the voltage difference is less than the voltage difference threshold. When the battery module is at the end of a charging stage or in a static standing stage, the time in which the voltage difference between the voltage of the maximum cell and the voltage of the minimum cell is greater than or equal to the voltage difference threshold is very short. Consequently, the battery module activates the balancing for just a short period of time. The short balancing time is not enough to counteract the difference caused by self power consumption of the cells, thereby aggravating the inconsistency between the cells. The voltage of the maximum cell means a maximum voltage value of the cells in the battery module, and the voltage of the minimum cell means a minimum voltage value of the cells in the battery module.

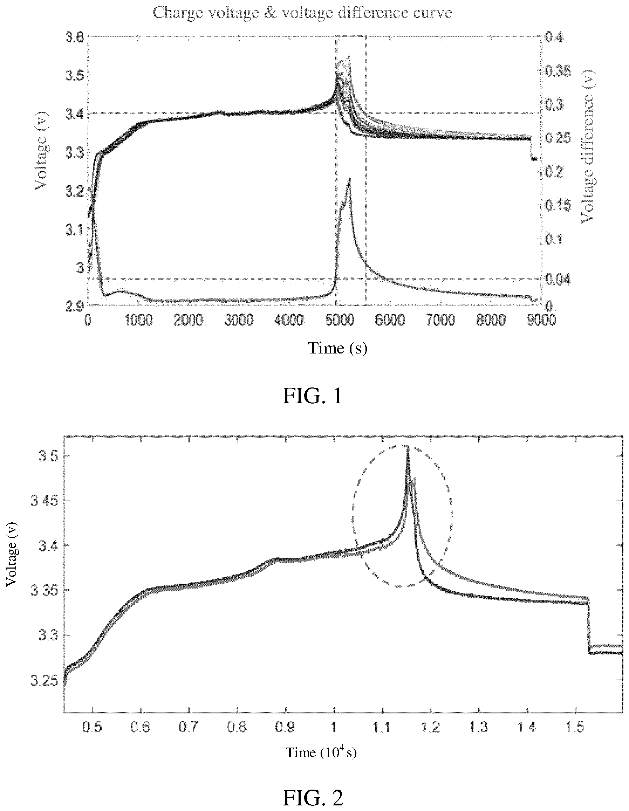

Referring to FIG. 1, which is a schematic diagram of a balancing time in a conventional cell balancing method, as shown in FIG. 1, the blue curve is a voltage variation curve of the cells in the battery module. Each blue curve corresponds to one cell. The red curve represents a variation curve of the voltage difference between the maximum cell and the minimum cell. The maximum cell means a cell with the highest voltage in the battery module, and the minimum cell means a cell with the lowest voltage in the battery module. As an example, when the voltage values of all cells in the battery module are greater than or equal to 3.4 V, the cells are balanced based on an instantaneous voltage difference. The voltage difference threshold is set to 40 millivolts (mv). As shown in FIG. 1, the time corresponding to the blue dashed box is a balancing activation time. In other words, the cell balancing is performed on the battery module only within the time corresponding to the blue dashed box. As can be seen, the balancing time is very short, only about ten minutes.

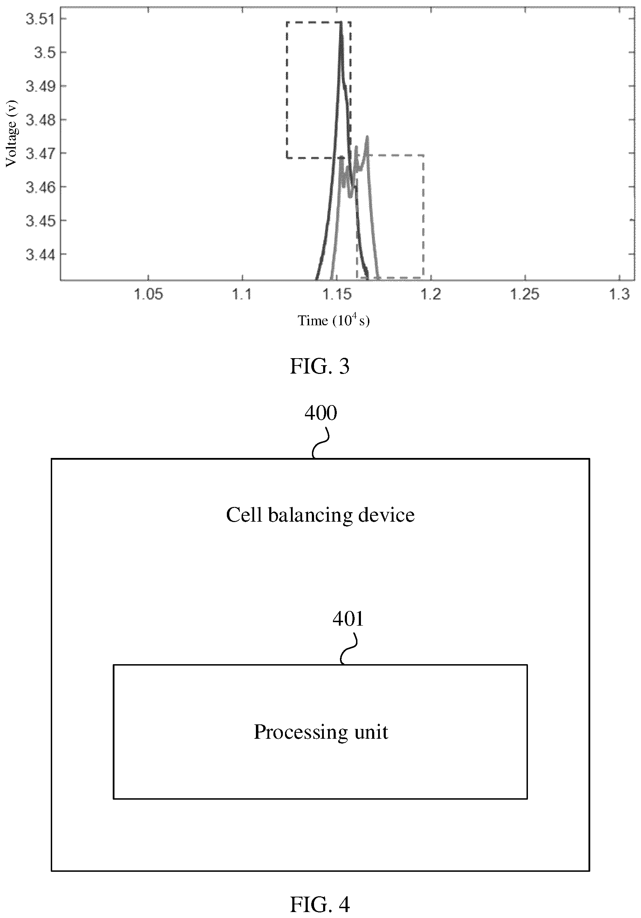

In addition, a problem of erroneous balancing occurs when the battery module is balanced by the conventional cell balancing method. The erroneous balancing means that a cell that does not need to be balanced is balanced mistakenly. Because the voltage of the cell is still changing at the end of a charging or discharging stage and at the beginning of a static standing stage of the battery module, the minimum cell determined at this time may be inaccurate, and it is possible that an actual minimum cell is subjected to step-down balancing, thereby resulting in erroneous balancing. Referring to FIG. 2 and FIG. 3, FIG. 2 and FIG. 3 are schematic diagrams of voltage variations of two different cells in the same battery module. In the drawings, the blue curve and the red curve are voltage variation curves of different cells respectively. The cell corresponding to the blue curve is denoted as a first cell, and the cell corresponding to the red curve is denoted as a second cell. The time corresponding to the red dashed circle part in FIG. 2 is the balancing activation time. FIG. 3 is a close-up view of the red dashed circle part shown in FIG. 2. Referring to FIG. 2, the first cell corresponding to the blue curve is the actual minimum cell in the battery module. In other words, during balancing, the first cell does not need to be balanced. However, referring to FIG. 3, the voltage value corresponding to the blue curve in the blue dashed box part is higher than the voltage value corresponding to the red curve. In this case, during balancing, the second cell corresponding to the red curve is used as a minimum cell, and the first cell corresponding to the blue curve is balanced. However, as can be seen from FIG. 2, the first cell is the actual minimum cell that does not need to be balanced. Therefore, the balancing process corresponding to the blue dashed box in FIG. 3 is erroneous balancing.

If erroneous balancing occurs, the battery module may incur problems such as a high energy depletion rate and a low power utilization rate.

As can be seen, the conventional cell balancing method exhibits defects such as a short balancing time, a slow balancing speed, and erroneous balancing, thereby resulting in a high energy depletion rate of the battery module and a low power utilization rate.

To alleviate the above problem, an embodiment of this application provides a cell balancing device and method. First, the following describes a cell balancing device provided in an embodiment of this application.

The cell balancing device provided in an embodiment of this application is configured to balance cells in a battery module. In practical applications, the cell balancing device may be used alone or integrated in a battery management system (BMS). The technical principles of the cell balancing device provided in an embodiment of this application are: the inconsistency between the cells in the battery module is identified first, and then a balancing operation is performed based on the inconsistency of the cells.

Referring to FIG. 4, which is a schematic diagram of a cell balancing device according to an embodiment of this application, as shown in FIG. 4, the cell balancing device 400 provided in this embodiment includes at least a processing unit 401. The processing unit 401 includes, but is not limited to, a processor CPU, a microcontroller MCU, and the like.

In this embodiment, the processing unit 401 obtains a first minimum cell voltage value and a first maximum cell voltage value of a to-be-balanced battery module in the latest full-charging operation. The battery module includes a plurality of cells.

In this embodiment, the latest full-charging operation of the battery module means the latest full-charging operation immediately before the current charging operation of the battery module. As an example, if the previous charging operation on the battery module is a full-charging operation, the charge at the end of the previous charging operation is used as the latest full charge of the battery module. The minimum cell voltage value of the battery module in the latest full-charging operation is used as the first minimum cell voltage, and the maximum cell voltage value of the battery module in the latest full-charging operation is used as the first maximum cell voltage value.

In one or more embodiments of this application, the cell balancing device 400 includes a storage unit and a communication unit. The storage unit and the processing unit 401 exchange data through the communication unit. The storage unit stores the maximum cell voltage Vlmax and the minimum cell voltage Vlmin of the battery module at a cut-off point of a full-charging operation. When there is a new full-charge cut-off maximum cell voltage V1max and a new full-charge cut-off minimum cell voltage V1min, the new values overwrite the full-charge cut-off maximum cell voltage Vlmax and the full-charge cut-off minimum cell voltage Vlmin that are previously stored in the storage unit. In other words, the storage unit stores only the maximum voltage Vlmax and the minimum voltage Vlmin of the battery module at the end of the latest full-charging operation. Based on this, in an optional embodiment, the processing unit 401 reads the maximum cell voltage Vlmax and the minimum cell voltage V1min stored in the storage unit, uses the maximum cell voltage Vlmax as a first maximum cell voltage value, and uses the minimum cell voltage Vlmin as a first minimum cell voltage value.

In this embodiment, the battery module performs the first charging operation, such that the voltage of the cell in the cell module increases. The processing unit 401 confirms whether the voltage of the cell in the battery module reaches or exceeds a first minimum cell voltage value, and uses the cell that reaches or exceeds the first minimum cell voltage value as a first target cell. Understandably, due to the inconsistency of voltage between the cells, the voltages of one or more cells in the battery module reach or exceed the first minimum cell voltage value at different times and the corresponding cells become one or more first target cells.

In this embodiment, for each first target cell, the processing unit 401 computes, during the first charging operation performed by the battery module, the integral of the current that flows through the first target cell, where the integral computing begins when the voltage of the first target cell reaches the first minimum cell voltage value, and the integral computing continues until the end of the first charging operation of the battery module, whereupon the computing is stopped. The integral value obtained by the mathematical integration is used as a first charge capacity of the first target cell in the corresponding first time period. The first time period means a period of time that begins when the voltage of the first target cell reaches or exceeds the first minimum cell voltage value and that ends when the first charging operation is ended.

In one or more embodiments of this application, the processing unit 401 determines, when the battery module performs the first charging operation, whether the first charging operation satisfies the following termination conditions:

The electrical connection between the battery module and a charging device is disconnected: The charging device is configured to provide power for the battery module. The charging device includes, but is not limited to, a power supply adapter, a charging pile, or the like. As some examples, the charging switch is turned off to cut off the electrical connection between the battery module and the charging device, or, the charging device is physically disconnected from the battery module to cut off the electrical connection between the battery module and the charging device;

The battery module reaches a charging cut-off SOC: The charging cut-off SOC of the battery module may be set according to actual conditions, or, may be predicted based on the historical charging records of the battery module; or

The minimum cell voltage value of the battery module in the first charging operation is greater than or equal to the first minimum cell voltage value.

When the battery module satisfies any one of the above termination conditions, it is determined that the first charging operation is terminated, and therefore, the mathematical integration is stopped. In this way, the voltage value of the minimum cell of the battery module in the first charging operation is prevented from being greater than the first minimum cell voltage value. Therefore, erroneous balancing can be reduced by using the cell with a voltage value greater than or equal to the first minimum cell voltage value as the first target cell to be balanced.

In this embodiment, for each first target cell, the processing unit 401 updates the balancing capacity of the first target cell based on the first charge capacity of the first target cell in the corresponding first time period.

In an optional embodiment, for each first target cell, the first charge capacity of the first target cell in the corresponding first time period is used as a capacity that the first target cell needs to consume during balancing, that is, used as a balancing capacity of the first target cell. Balancing the first target cell based on the determined balancing capacity can reduce erroneous balancing and improve cell consistency.

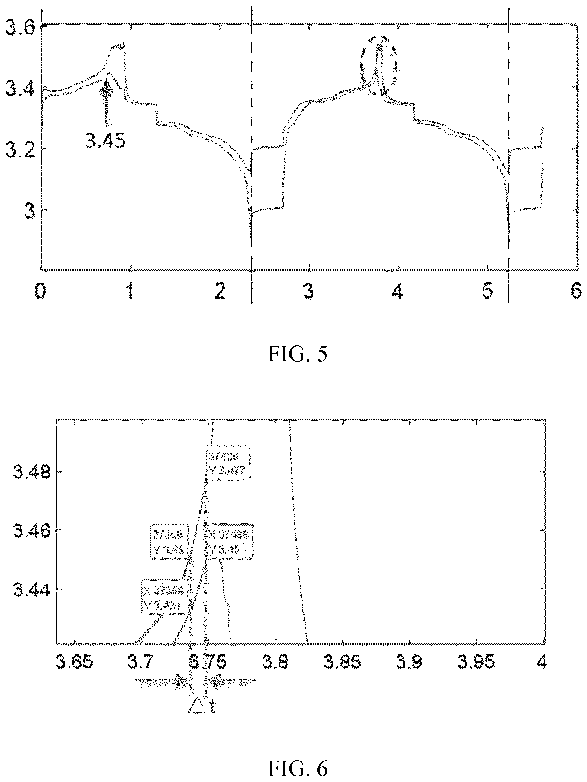

As an example of this application, referring to FIG. 5 and FIG. 6, FIG. 5 is a schematic diagram of charge voltage of cells in a battery module, FIG. 5 shows a voltage variation curve of the cells in two consecutive charge-and-discharge operations, and FIG. 6 is a close-up view corresponding to the red dashed circle part shown in FIG. 5. In FIG. 5 and FIG. 6, the horizontal axis represents time, in units of 10⁴ seconds (s), and the vertical axis represents a voltage value, in units of volts (V). The blue curve and the red curve represent the voltage variation curves of different cells. The blue curve corresponds to the maximum cell, and the red curve corresponds to the minimum cell. In an example, the first minimum cell voltage value in the latest full-charging operation is 3.45 V. As shown in FIG. 5, the maximum cell reaches 3.45 V first. Upon the maximum cell reaching 3.45 V, the minimum cell has not reached 3.45 V, and the battery module continues charging. When the charging continues, the voltage of the maximum cell keeps increasing. When the minimum cell is charged to 3.45 V, the battery module finishes charging. The purpose of cell balancing is to make the voltage of the maximum cell consistent with the voltage of the minimum cell. Therefore, in order to achieve cell balancing, it is necessary to release the charge accumulated in the maximum cell in the first time period. The first time period is a time period Δt that begins when the maximum cell is charged to 3.45 V and that ends when the minimum cell is charged to 3.45 V, and is the time period corresponding to the red dashed circle. The charge delivered to the maximum cell in the time period Δt is calculated by mathematical integration. For example, the voltage value of the maximum cell in the battery module is denoted as V2i. When the voltage value V2i of the maximum cell in the battery module reaches 3.45 V for the first time, the current flowing through the maximum cell is mathematically integrated until the voltage value of the minimum cell in the battery module reaches 3.45 V for the first time, whereupon the charging operation is terminated and integration is stopped. The integral value obtained upon stop of the integration is used as the first charge capacity of the maximum cell, and the first charge capacity is used as a capacity that needs to be consumed from the maximum cell during the balancing operation.

In the cell balancing device provided in this embodiment of this application, based on the charge capacity of the cell to be balanced in the battery module, the processing unit 401 updates the balancing capacity of the cell to be balanced, thereby determining a more accurate balancing capacity of the cell to be balanced. When balancing is performed based on said balancing capacity, erroneous balancing can be reduced. Moreover, the balancing capacity of the cell to be balanced can be determined under the charging condition and the static standing condition of the battery module. Therefore, the balancing time is no longer limited to the end of a charging stage and the static standing stage. In addition, the balancing is performed when the maximum cell voltage difference meets the specified condition, thereby increasing the balancing time and the balancing speed.

The above method by which the balancing capacity of the first target cell is updated based on the first charge capacity of the first target cell is applicable to the case where the SOC value of the battery module is greater than a specified SOC value during the current charging operation, where the specified SOC value is a first SOC threshold.

In one or more embodiments of this application, before the processing unit 401 obtains the first minimum cell voltage value and the first maximum cell voltage value of the to-be-balanced battery module in the latest full-charging operation, the processing unit 401 evaluates the number of consecutive times a charging cut-off SOC is less than or equal to a first SOC threshold, and determines whether the number of consecutive times is less than M in last N historical charging operations of the battery module.

Here, both M and N are positive integers, and M is less than or equal to N. The values of M and N may be set according to actual conditions. As an example, the first SOC threshold is a value between 80% and 100%.

In this embodiment, the N historical charging operations of the battery module mean the N historical charging operations immediately before the current charging operation of the battery module within a continuous charging duration.

In one or more embodiments of this application, the cell balancing device 400 further includes a counter. The counter is configured to cumulatively count the number of consecutive times a SOC value at a charging cut-off point is less than or equal to the first SOC threshold in last N historical charging operations of the battery module. The storage unit also stores flag bits of the counter: a flag bit 1 and a flag bit 0. The flag bit 1 represents that the number of consecutive times the SOC value at the charging cut-off point of the battery module is less than or equal to the first SOC threshold is greater than or equal to M. The flag bit 0 represents that the number of consecutive times the SOC value at the charging cut-off point of the battery module is less than or equal to the first SOC threshold is less than M. When the battery module stops charging in each charging operation, the flag bit of the counter is updated based on whether the number of consecutive times the SOC value at the charging cut-off point of the battery module is less than or equal to the first SOC threshold is greater than or equal to M. As an example, M is equal to 4. If the charging cut-off SOC in the first charging operation performed by the battery module is less than or equal to the first SOC threshold, the flag bit of the counter is 0, and the flag bit 0 is stored in the storage unit. If the SOC value at the charging cut-off point in a second charging operation of the battery module is less than or equal to the first SOC threshold, the flag bit of the counter is still 0. If the SOC values at the charging cut-off point in the next third and fourth charging operations of the battery module are both less than or equal to the first SOC threshold, the flag bit of the counter is updated to 1 upon termination of the fourth charging operation of the battery module. Based on this, in an optional embodiment, the processing unit 401 directly obtains the flag bit of the counter from the storage unit. If the flag bit is 0, the processing unit determines that the number of consecutive times the charging cut-off SOC of the battery module is less than or equal to the first SOC threshold is less than M in the last N historical charging operations. If the flag bit is 1, the processing unit determines that the number of consecutive times the charging cut-off SOC of the battery module is less than or equal to the first SOC threshold is greater than or equal to M in the last N historical charging operations. In this way, the processing unit 401 can quickly determine whether the number of consecutive times is less than M.

In this embodiment, when determining that the number of consecutive times is less than M, the processing unit 401 considers that the number of times the battery module fails to be charged to the first SOC threshold in the previous N charging operations is less than M. The processing unit obtains the first minimum cell voltage value and the first maximum cell voltage value of the battery module in the latest full-charging operation of the battery module, and a next charging operation performed by the battery module is denoted as a first charging operation. When the SOC value of the battery module being charged is greater than the first SOC threshold, it is considered that the SOC value of the battery module exceeds the specified SOC value. When the battery module is charged to a relatively high SOC value, the balancing capacity of the cell to be balanced in the battery module is calculated based on the first operation, thereby improving the calculation precision of the balancing capacity. The cell in the battery module is balanced based on the determined balancing capacity, thereby reducing erroneous balancing.

In order to make the processing unit 401 applicable to battery modules in different scenarios, the processing unit 401 is further configured to perform other operations when the number of consecutive times is greater than or equal to M.

In one or more embodiments of this application, the processing unit 401 is configured to obtain an open-circuit voltage value of a minimum cell and an open-circuit voltage value of a remaining cell in the battery module when determining that the number of consecutive times is greater than or equal to M if the SOC value of the battery module in a current charging operation is less than or equal to the first SOC threshold and if the battery module is in a static standing state.

In this embodiment, the minimum cell is a cell with the lowest voltage value in the battery module, and the remaining cell is a cell other than the minimum cell in the battery module. The open-circuit voltage value of a cell is also referred to as an off-load voltage value, and is a voltage value of a cell that no current flows through.

The processing unit 401 obtains the open-circuit voltage value of the minimum cell and the open-circuit voltage value of the remaining cell in the battery module, and then calculates a balancing capacity of the remaining cell based on a SOC-OCV function, the open-circuit voltage value of the minimum cell, and the open-circuit voltage value of the remaining cell, so as to obtain an updated balancing capacity of the remaining cell.

In this embodiment, the processing unit 401 determines, based on static standing state determining indicators, whether the battery module is in a static standing state, where the static standing state determining indicators include: whether the static standing time of the battery module is greater than a threshold, whether the voltage fluctuation is not greater than a threshold, whether the current is not greater than a threshold, and the like. When determining that the battery module is in the static standing state, the processing unit 401 updates the balancing capacity of the remaining cell other than the minimum cell in the battery module based on a SOC-OCV function. Here, the SOC-OCV function is used for indicating a correspondence between SOC and OCV. The SOC-OCV function may be presented in the form of a curve, a functional relationship, a table, or the like.

In one or more embodiments of this application, when the processing unit 401 updates the balancing capacity of the remaining cell other than the minimum cell in the battery module based on the SOC-OCV function, the processing unit determines, based on the SOC-OCV function, a first SOC value corresponding to the open-circuit voltage value of the remaining cell and a second SOC value corresponding to the open-circuit voltage value of the minimum cell, calculates a difference between the first SOC value and the second SOC value, and uses the difference as an updated balancing capacity of the remaining cell.

As an example, the SOC-OCV function is presented in the form of a SOC-OCV table, by searching the SOC-OCV table, the processing unit 401 determines the first SOC value corresponding to the open-circuit voltage value of the remaining cell and the second SOC value corresponding to the open-circuit voltage value of the minimum cell, calculates a difference between the first SOC value and the second SOC value, and uses the difference as an updated balancing capacity of the remaining cell.

In the historical charging operations of the battery module, when the number of consecutive times the charging cut-off SOC is less than or equal to the first SOC threshold is greater than or equal to M, and when the SOC value of the battery module in the current charging operation is less than or equal to the first SOC threshold, it is considered that the battery module incurs the phenomenon that the battery module fails to be charged to the specified SOC value for a plurality of consecutive times during the charging. When the battery module is in a static standing state, the cell that needs to be balanced and the balancing capacity of the cell that needs to be balanced when the battery module is in a static standing state can be obtained based on the SOC-OCV function. Balancing the cell that needs to be balanced based on the determined balancing capacity can improve the consistency of the cells when the SOC value of the battery module is at a low level, thereby reducing the adverse effect caused by the inconsistency of cells to the battery module and improving the quality of the battery module.

In one or more embodiments of this application, in evaluating the number of consecutive times a charging cut-off SOC is less than or equal to the first SOC threshold, when it is determined that the number of times is greater than or equal to M in the last N historical charging operations of the battery module, the battery module may be in a charging state instead of a static standing state.

If the following conditions are satisfied, it is considered that the battery module performs a second charging operation: in evaluating the number of consecutive times a charging cut-off SOC is less than or equal to the first SOC threshold, the processing unit 401 determines that the number of times is greater than or equal to M in the last N historical charging operations of the battery module; the SOC value of the battery module at the cut-off point of the current charging operation is less than or equal to the first SOC threshold; and, it is determined that the battery module is in a charging state.

In a case that the battery module performs the second charging operation and the fluctuation or variation of the charging rate is relatively small, the processing unit 401 obtains a second minimum cell voltage value and a second maximum cell voltage value in the battery module before performing the second charging operation.

In an optional embodiment, the small fluctuation or variation of the charging rate means that the fluctuation or variation rate of the charging rate does not exceed a variation threshold. As an example, the variation threshold is any one of 0.1%, 0.5%, 1%, 2%, 5%, 8%, or 10%, or any value between 0.1% and 10%. Understandably, the above specific values are some examples of the variation threshold, and are not intended as a restrictive interpretation for the small fluctuation or variation of the charging rate of this application. Here, the fluctuation of the charging rate of the battery module is controlled to be less than the fluctuation threshold in order to balance the cell when the battery module is stably charged, thereby eliminating the interference of current fluctuations and improving the accuracy of calculating the balancing capacity.

In this embodiment, the battery module performs the second charging operation, such that the voltage of the cell in the cell module increases. The processing unit 401 confirms whether the voltage of the cell reaches or exceeds a second maximum cell voltage value, and uses the cell that reaches or exceeds the second maximum cell voltage value as a second target cell. Understandably, due to the inconsistency of voltage between the cells, the voltages of one or more cells in the battery module reach or exceed the second maximum cell voltage value at different times and the corresponding cells become one or more second target cells. The second maximum cell voltage value means a maximum voltage value of the cells in the battery module before the battery module performs the second charging operation.

In this embodiment, for each second target cell, the processing unit 401 computes, during the second charging operation performed by the battery module, the integral of the current that flows through the second target cell, where the integral computing begins when the voltage of the second target cell reaches or exceeds the second maximum cell voltage value for a first time, and the integral computing continues until the end of the second charging operation of the battery module, whereupon the computing is stopped. The integral value obtained by the mathematical integration is used as a second charge capacity of the second target cell in the corresponding second time period. The second time period means a period of time that begins when the voltage of the second target cell reaches or exceeds the second maximum cell voltage value and that ends when the second charging operation is ended.

In one or more embodiments of this application, the processing unit 401 determines, when the battery module performs the second charging operation, whether the second charging operation satisfies the following termination conditions:

The electrical connection between the battery module and the charging device is cut off, where the charging device is configured to provide power for the battery module. The charging device includes, but is not limited to, a power supply adapter, a charging pile, or the like; and

The minimum cell voltage value of the battery module in the second charging operation is greater than or equal to the second maximum cell voltage value.

When the battery module satisfies any one of the above termination conditions, it is determined that the second charging operation is terminated, and therefore, the mathematical integration is stopped. In this way, the voltage value of the minimum cell of the battery module in the second charging operation is prevented from being greater than the second maximum cell voltage value. Therefore, erroneous balancing can be reduced by using the cell with a voltage value greater than or equal to the second maximum cell voltage value as the second target cell to be balanced.

In this embodiment, for each second target cell, the processing unit 401 updates the balancing capacity of the second target cell based on the second charge capacity of the second target cell in the corresponding second time period.

In one or more embodiments of this application, for each second target cell, the second charge capacity of the second target cell in the corresponding second time period is used as a capacity that the second target cell needs to consume during balancing, that is, used as a balancing capacity of the second target cell. Balancing the second target cell based on the determined balancing capacity can reduce erroneous balancing and improve cell consistency.

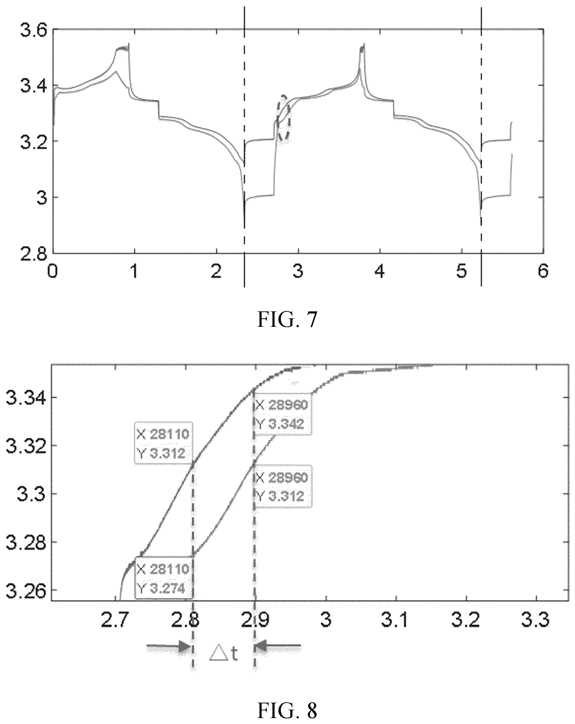

As an example, referring to FIG. 7 and FIG. 8, FIG. 7 is a schematic diagram of voltage variation of cells in a battery module, FIG. 7 shows a voltage variation curve of the cells in two consecutive charge-and-discharge operations, and FIG. 8 is a close-up view corresponding to the red dashed circle part shown in FIG. 7. In FIG. 7 and FIG. 8, the horizontal axis represents time, in units of 10⁴ seconds (s), and the vertical axis represents a voltage value, in units of volts (V). The blue curve and the red curve represent the voltage variation curves of different cells. The cell corresponding to the blue curve is denoted as a maximum cell, and the cell corresponding to the red curve is denoted as a minimum cell. In an example, the second maximum cell voltage value in the current charging operation of the battery module is 3.312 V. As shown in FIG. 7, the maximum cell reaches 3.312 V first. Upon the maximum cell reaching 3.312 V, the minimum cell has not reached 3.312 V, and the battery module continues charging. When the charging continues, the voltage of the maximum cell keeps increasing. When the minimum cell is charged to 3.312 V, the battery module finishes charging. The purpose of cell balancing is to make the voltage of the maximum cell consistent with the voltage of the minimum cell. Therefore, in order to achieve cell balancing, it is necessary to release the charge accumulated in the maximum cell in the second time period. The second time period is a time period Δt that begins when the maximum cell is charged to 3.312 V and that ends when the minimum cell is charged to 3.312 V, and is the time period corresponding to the red dashed circle. The charge cumulatively delivered to the maximum cell in the time period Δt is determined by mathematical integration. For example, the voltage value of the maximum cell in the battery module is denoted as V2i. When the voltage value V2i of the maximum cell in the battery module reaches 3.312 V for the first time, the current flowing through the maximum cell is mathematically integrated until the voltage value of the minimum cell in the battery module reaches 3.312 V for the first time, whereupon the charging operation is terminated and integration is stopped. The integral value obtained upon stop of the integration is used as the second charge capacity of the maximum cell, and the second charge capacity is used as an updated balancing capacity of the maximum cell.

In this way, in the historical charging operations of the battery module, when the number of consecutive times the charging cut-off SOC value is less than or equal to the first SOC threshold is greater than or equal to M, and when the SOC value of the battery module in the current charging operation is less than or equal to the first SOC threshold, it is considered that the battery module incurs the phenomenon that the battery module fails to be charged to the specified SOC value for a plurality of consecutive times during the charging. In this case, when the battery module is in a charging condition, the balancing capacity of the cell to be balanced is updated based on the charge capacity of the cell to be balanced in the battery module, thereby determining the more accurate balancing capacity of the cell to be balanced. Balancing is performed based on said balancing capacity, thereby reducing erroneous balancing, improving the consistency of the cells in the battery module at a low SOC, and improving the quality of the battery module.

In one or more embodiments of this application, during the last N charging processes of the battery module, the charging cut-off SOC is less than or equal to the first SOC threshold for a plurality of times, and the number of consecutive times the charging cut-off SOC is less than or equal to the first SOC threshold is greater than M. During the current charging operation performed by the battery module, the SOC value of the battery module increases. When the SOC value of the battery module exceeds the first SOC threshold, the processor also performs the first operation to calculate the balancing capacity of the cell to be balanced in the battery module. Based on this, the processing unit 401 detects, during the current charging operation of the battery module when the number of consecutive times is greater than or equal to M, whether the SOC value of the battery module is less than or equal to the first SOC threshold. If the SOC value of the battery module in the current charging operation is greater than the first SOC threshold, the processing unit determines the balancing capacity of the first target cell in the battery module in the same way as in the case where the battery module performs the first charging operation. At the same time, the flag bit of the counter is updated from 1 to 0.

When the SOC value of the battery module in the current charging operation is greater than the first SOC threshold, it is considered that the SOC value of the battery module exceeds the specified SOC value. When the battery module is charged to a relatively high SOC value, the balancing capacity of the cell to be balanced in the battery module is calculated based on the first operation, thereby improving the calculation precision of the balancing capacity. The cell in the battery module is balanced based on the determined balancing capacity, thereby reducing erroneous balancing.

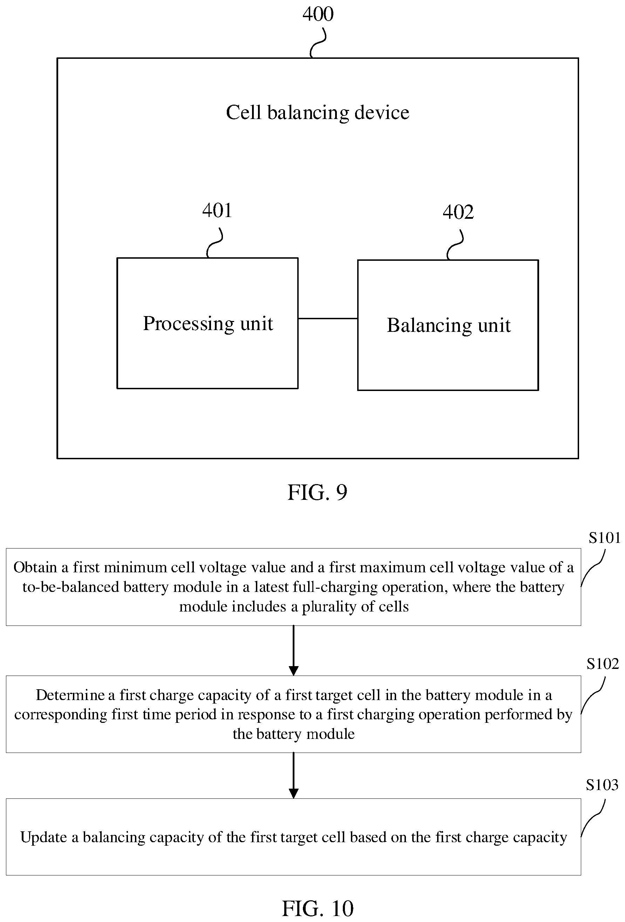

In some embodiments, as shown in FIG. 9, the cell balancing device 400 includes:
a plurality of balancing units 402. The number of balancing units 402 corresponds to the number of cells in the battery module. Each balancing unit 402 includes a resistor and a switch connected in series. The conduction and disconnection between the resistor and the cell can be controlled by controlling the on-state and off-state of the switch.

In an optional embodiment, the switch is a controlled switch such as a metal-oxide semiconductor field-effect transistor (MOSFET).

In some embodiments of this application, the balancing unit 402 is disposed on the processing unit 401.

In some other embodiments of this application, the balancing unit 402 is electrically connected between the cell of the battery module and the processing unit 401. FIG. 9 shows an example in which the balancing unit 402 is electrically connected between the cell of the battery module and the processing unit 401.

In this embodiment, the processing unit 401 is configured to, for each cell that needs to be balanced in the battery module, control a switch in a balancing unit to become turned on, where the balancing unit corresponds to the cell that needs to be balanced, and the control is exercised when the battery module is in a target state, and is exercised based on a balancing capacity of the cell that needs to be balanced in the battery module, and is exercised in response to a condition that the cell that needs to be balanced satisfies a balancing operation condition. A resistor in the balancing unit consumes the power of the cell that needs to be balanced, thereby implementing the balancing operation on the cell that needs to be balanced. The cell that needs to be balanced includes: the first target cell, the remaining cell in the battery module, or the second target cell in the battery module. In other words, depending on different conditions of the battery module, the cell that needs to be balanced is the first target cell, the remaining cell in the battery module, or the second target cell in the battery module. The target state includes any one or more of: a charging state, a discharging state, or a static standing state.

In this way, when the battery module is in a charging condition, a discharging condition, or a static standing condition, the processing unit determines that the cell meets the balancing operation condition, and further controls the switch to become turned on, so that the cell undergoes a balancing operation by discharging, thereby improving the consistency of the cells in the battery module, improving the quality of the battery module, and enabling the battery module to perform the balancing operation in a variety of operating conditions.

In one or more embodiments of this application, the balancing operation condition may include at least one of the following conditions:

The temperature of the cell that needs to be balanced is less than a first temperature threshold, and the first temperature threshold may be set according to actual conditions. By setting this condition, this application avoids balancing an overtemperature cell;

The temperature of a resistor in the balancing unit corresponding to the cell that needs to be balanced is less than a second temperature threshold, and the second temperature threshold may be set according to actual conditions. By setting this condition, this application prevents an overtemperature resistor from being used for balancing; or

The voltage of the cell that needs to be balanced is greater than a voltage threshold. The voltage threshold may be a discharge cut-off voltage or a lowest voltage that is instantly stepped down when the cell is discharged at a high power. The voltage threshold may be set according to actual conditions. By setting this condition, this application avoids undervoltage of a balanced cell.

The remaining balancing capacity of the cell that needs to be balanced is greater than 0. By setting this condition, this application avoids balancing for a cell that does not need to be balanced, thereby reducing erroneous balancing.

In this embodiment, for each cell that needs to be balanced, the processing unit 401 determines whether the cell that needs to be balanced satisfies the balancing operation conditions. When any one of the above conditions is not satisfied, the processing unit determines that the cell that needs to be balanced fails to satisfy the balancing operation conditions, and therefore, does not perform the balanced operation for the cell that needs to be balanced. When all of the above conditions are satisfied, the processing unit determines that the cell that needs to be balanced satisfies the balancing operation conditions, and therefore, based on the balancing unit 402 corresponding to the cell that needs to be balanced, performs a balancing operation on the cell that needs to be balanced. In this way, an overtemperature cell can be prevented from being balanced, and an overtemperature resistor is prevented from being used for balancing the cell, thereby preventing the undervoltage of the balanced cell. In addition, the balancing process is terminated in time when the remaining balancing capacity or electrical capacity of the cell is 0, thereby reducing erroneous balancing for the cells and improving the cell balancing effect.

In addition, in order to improve the success rate of balancing, the processing unit 401 may be further configured to: before performing the balancing operation on the cell that needs to be balanced, determine whether the balancing unit 402 corresponding to the cell that needs to be balanced is available, and, if it is determined that the balancing unit 402 is available, perform the balancing operation on the cell that needs to be balanced.

In one or more embodiments of this application, the balancing unit 402 performs periodic balancing operations on the cell that needs to be balanced, that is, performs one balancing operation in one period. Through balancing in a plurality of periods, all the balancing capacity of the cell that needs to be balanced is depleted. In this way, for each cell that needs to be balanced, in each balancing period, the processing unit 401 updates, based on a balancing current and a balancing period of the balancing operation performed on the cell that needs to be balanced, a remaining balancing capacity of the cell that needs to be balanced. During a balancing operation performed on the cell that needs to be balanced, the balancing capacity of the cell that needs to be balanced gradually decreases. The decrement of the balancing capacity or electrical capacity in each balancing cycle is a value of the balancing current and the length of the balancing period. Therefore, based on the balancing current and balancing period in the balancing operation, the remaining balancing capacity of the cell that needs to be balanced can be updated accurately. After the remaining balancing capacity is updated, if the cell that needs to be balanced meets the balancing operation condition, the processing unit continues to perform, in a next balancing period, the balancing operation on the cell that needs to be balanced, where the balancing operation is based on the updated remaining balancing capacity or electrical capacity and continues until the remaining balancing capacity of the cell that needs to be balanced is updated to 0.

In this way, when a cell in the battery module are balanced, the remaining balancing capacity of the cell can be periodically calculated and updated until the remaining balancing capacity is 0, and then the balancing operation is terminated, thereby improving the effectiveness of the balancing process and reducing overbalancing.

Based on the cell balancing device provided in the above embodiment, this application further provides a specific implementation of a cell balancing method, as described in the following embodiments:

As shown in FIG. 10, a cell balancing method provided in an embodiment of this application includes the following steps S101 to S103:
S101: Obtain a first minimum cell voltage value and a first maximum cell voltage value of a to-be-balanced battery module in a latest full-charging operation, where the battery module includes a plurality of cells.

S102: Determine a first charge capacity of a first target cell in the battery module in a corresponding first time period in response to a first charging operation performed by the battery module.

S103: Update a balancing capacity of the first target cell based on the first charge capacity.

Here, the first target cell is a cell with a voltage value greater than or equal to the first minimum cell voltage value when the battery module performs the first charging operation. The first time period corresponding to the first target cell is a period of time that begins when the voltage value of the first target cell reaches or exceeds the first minimum cell voltage value for a first time and that ends when the first charging operation of the battery module is ended, as counted throughout the first charging operation performed by the battery module.

In the cell balancing method provided in this embodiment of this application, based on the charge capacity of the cell to be balanced in the battery module, the balancing capacity of the cell to be balanced is updated, thereby determining a more accurate balancing capacity of the cell to be balanced. When balancing is performed based on said balancing capacity, erroneous balancing can be reduced. Moreover, the balancing capacity of the cell to be balanced can be determined under the charging condition and the static standing condition of the battery module. Therefore, the balancing time is no longer limited to the end of a charging stage and the static standing stage. In addition, the balancing is performed when the maximum cell voltage difference meets the specified condition, thereby increasing the balancing time and the balancing speed.

In one or more embodiments of this application, the conditions for ending the first charging operation may include at least one of the following conditions:
The electrical connection between the battery module and a charging device is disconnected;
The battery module reaches a charging cut-off SOC; or
The minimum cell voltage value of the battery module in the first charging operation is greater than or equal to the first minimum cell voltage value.

Here, the processing unit controls the ending of the first charging operation based on the conditions for ending the first charging operation. In this way, the voltage value of the minimum cell of the battery module in the first charging operation is prevented from being greater than the first minimum cell voltage value. Therefore, erroneous balancing can be reduced by using the cell with a voltage value greater than or equal to the first minimum cell voltage value as the first target cell to be balanced.

In one or more embodiments of this application, before obtaining the first minimum cell voltage value and the first maximum cell voltage value of the to-be-balanced battery module in the latest full-charging operation, the method further includes:
evaluating a number of consecutive times a charging cut-off SOC is less than or equal to a first SOC threshold, and determining whether the number of consecutive times is less than M in last N historical charging operations of the battery module.

The obtaining the first minimum cell voltage value and the first maximum cell voltage value of the to-be-balanced battery module in the latest full-charging operation includes: performing, by the processing unit, the first operation in response to the number of consecutive times being less than M.

Both M and N are positive integers, and M is less than or equal to N.

Here, in the historical charging operations of the battery module, when the number of consecutive times the charging cut-off SOC is less than or equal to the first SOC threshold is less than M, it is considered that the battery module does not incur the phenomenon that the battery module fails to be charged to the specified SOC value for a plurality of consecutive times under the charging condition. When the battery module is charged to a relatively high SOC value, the balancing capacity of the cell to be balanced in the battery module is calculated based on the first operation, thereby improving the calculation precision of the balancing capacity. The cell in the battery module is balanced based on the determined balancing capacity, thereby reducing erroneous balancing.

In one or more embodiments of this application, the obtaining the first minimum cell voltage value and the first maximum cell voltage value of the to-be-balanced battery module in the latest full-charging operation includes: obtaining, in response to a condition that the number of consecutive times is greater than or equal to M and a condition that a SOC value of the battery module in a current charging operation is greater than the first SOC threshold, the first minimum cell voltage value and the first maximum cell voltage value of the to-be-balanced battery module in the latest full-charging operation.

Here, when the SOC value of the battery module in the current charging operation is greater than the first SOC threshold, it is considered that the SOC value of the battery module exceeds the specified SOC value. When the battery module is charged to a relatively high SOC value, the balancing capacity of the cell to be balanced in the battery module is calculated based on the first operation, thereby improving the calculation precision of the balancing capacity. The cell in the battery module is balanced based on the determined balancing capacity, thereby reducing erroneous balancing.

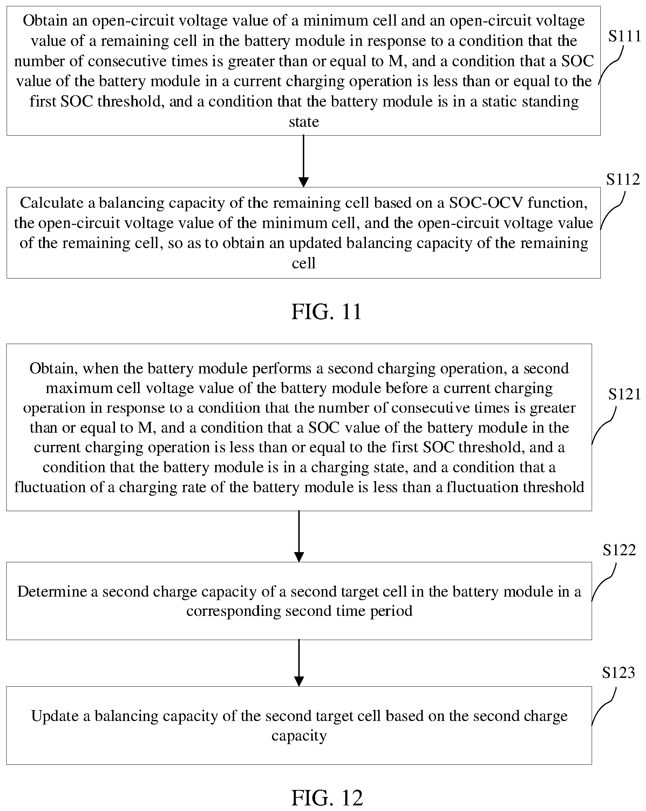

In one or more embodiments of this application, as shown in FIG. 11, the cell balancing method may further include the following steps S111 to S112: S111: Obtain an open-circuit voltage value of a minimum cell and an open-circuit voltage value of a remaining cell in the battery module in response to a condition that the number of consecutive times is greater than or equal to M, and a condition that a SOC value of the battery module in a current charging operation is less than or equal to the first SOC threshold, and a condition that the battery module is in a static standing state.

S112: Calculate a balancing capacity of the remaining cell based on a SOC-OCV function, the open-circuit voltage value of the minimum cell, and the open-circuit voltage value of the remaining cell, so as to obtain an updated balancing capacity of the remaining cell.

In this embodiment, the minimum cell is a cell with the lowest voltage value in the battery module, and the remaining cell is a cell other than the minimum cell in the battery module.

Here, in the historical charging operations of the battery module, when the number of consecutive times the charging cut-off SOC is less than or equal to the first SOC threshold is greater than or equal to M, and when the SOC value of the battery module in the current charging operation is less than or equal to the first SOC threshold, it is considered that the battery module incurs the phenomenon that the battery module fails to be charged to the specified SOC value for a plurality of consecutive times during the charging. When the battery module is under a static standing condition, the cell that needs to be balanced and the balancing capacity of the cell that needs to be balanced when the battery module is in a static standing state can be obtained based on the SOC-OCV function. Balancing the cell in the battery module based on the determined balancing capacity can improve the consistency of the cells when the SOC value of the battery module is at a low level, thereby reducing the adverse effect caused by the inconsistency of cells to the battery module and improving the quality of the battery module.

In one or more embodiments of this application, as shown in FIG. 12, the cell balancing method may further include the following steps S121 to S123: S121: Obtain, when the battery module performs a second charging operation, a second maximum cell voltage value of the battery module before a current charging operation in response to a condition that the number of consecutive times is greater than or equal to M, and a condition that a SOC value of the battery module in the current charging operation is less than or equal to the first SOC threshold, and a condition that the battery module is in a charging state, and a condition that a fluctuation of a charging rate of the battery module is less than a fluctuation threshold.

S122: Determine a second charge capacity of a second target cell in the battery module in a corresponding second time period.

S123: Update a balancing capacity of the second target cell based on the second charge capacity.

The second target cell is a cell with a voltage value greater than or equal to the second maximum cell voltage value when the battery module performs the second charging operation. The second time period corresponding to the second target cell is a period of time that begins when the voltage value of the second target cell reaches the second maximum cell voltage value for a first time and that ends when the second charging operation of the battery module is ended, as counted throughout the second charging operation performed by the battery module.

Here, in the historical charging operations of the battery module, when the number of consecutive times the charging cut-off SOC value is less than or equal to the first SOC threshold is greater than or equal to M, and when the SOC value of the battery module in the current charging operation is less than or equal to the first SOC threshold, it is considered that the battery module incurs the phenomenon that the battery module fails to be charged to the specified SOC value for a plurality of consecutive times during the charging. In this case, when the battery module is in a charging condition, the balancing capacity of the cell to be balanced is updated based on the charge capacity of the cell to be balanced in the battery module, thereby determining the more accurate balancing capacity of the cell to be balanced. Balancing is performed based on said balancing capacity, thereby reducing erroneous balancing, improving the consistency of the cells in the battery module at a low SOC, and improving the quality of the battery module.

In one or more embodiments of this application, the method further includes: performing a balancing operation on each cell that needs to be balanced, where the balancing operation is performed when the battery module is in a target state, and is performed based on a balancing capacity of the cell that needs to be balanced in the battery module, and is performed in response to a condition that the cell that needs to be balanced in the battery module satisfies a balancing operation condition.

The cell that needs to be balanced includes: the first target cell, the remaining cell in the battery module, or the second target cell in the battery module.

The target state includes at least one of: a charging state, a discharging state, or a static standing state.

The balancing operation includes: controlling a switch in a balancing unit to become turned on, where the balancing unit corresponds to the cell that needs to be balanced, and a resistor in the balancing unit consumes power of the cell that needs to be balanced (step-down balancing).

Here, when the battery module is in a charging condition, a discharging condition, or a static standing condition, the processing unit determines that the cell meets the balancing operation condition, and further controls the switch to become turned on, so that the cell undergoes a balancing operation by discharging, thereby improving the consistency of the cells in the battery module, improving the quality of the battery module, and enabling the battery module to perform the balancing operation in a variety of operating conditions.

In one or more embodiments of this application, the method further includes: updating, for each cell that needs to be balanced, a remaining balancing capacity of the cell that needs to be balanced, where the update is performed based on a balancing current and a balancing period of the balancing operation performed on the cell that needs to be balanced, and the update is performed after the balancing operation is performed on the cell that needs to be balanced.

Here, when a cell in the battery module are balanced, the remaining balancing capacity or electrical capacity of the cell can be periodically calculated and updated until the remaining balancing capacity or electrical capacity is 0, and then the balancing operation is terminated, thereby improving the effectiveness of the balancing process.

In one or more embodiments of this application, the balancing operation condition includes at least one of the following conditions:
A temperature of the cell that needs to be balanced is less than a first temperature threshold;
A temperature of a resistor in a balancing unit corresponding to the cell that needs to be balanced is less than a second temperature threshold;
A voltage of the cell that needs to be balanced is greater than a voltage threshold; or
The remaining balancing capacity of the cell that needs to be balanced is greater than 0.

Here, an overtemperature cell can be prevented from being balanced, and an overtemperature resistor is prevented from being used for balancing the cell, thereby preventing the undervoltage of the balanced cell. In addition, the balancing process is terminated in time when the remaining balancing capacity or electrical capacity of the cell is 0, thereby reducing erroneous balancing for the cells and improving the cell balancing effect.

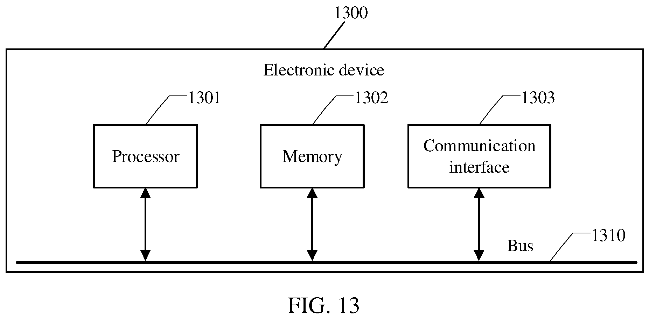

FIG. 13 is a schematic diagram of a hardware structure of an electronic device according to an embodiment of this application.

The electronic device 1300 may include a processor 1301 and a memory 1302 that stores a computer program instruction.

Specifically, the processor 1301 may include a central processing unit (CPU), or an application-specific integrated circuit (Application Specific Integrated Circuit, ASIC), or one or more integrated circuits configured to implement an embodiment of this application.

The memory 1302 may include a mass storage for data or instructions. By way of example and not limitation, the memory 1302 may include a hard disk drive (Hard Disk Drive, HDD), a floppy disk drive, flash memory, an optical disc, a magneto-optical disc, magnetic tape, a universal serial bus (Universal Serial Bus, USB) drive, or a combination of two or more thereof. Where appropriate, the memory 1302 may include a removable or non-removable (or fixed) medium. Where appropriate, the memory 1302 may be located inside or outside an integrated gateway disaster recovery device. In a specific embodiment, the memory 1302 is a non-volatile solid-state memory. The memory 1302 may include a read-only memory (ROM), a random access memory (RAM), a disc storage medium device, an optical storage medium device, a flash memory device, an electrical, optical, or other physical/tangible memory storage device. Therefore, generally, the memory 1302 includes one or more tangible (non-transitory) computer-readable storage media (for example, a memory device) that carry encoded software containing computer-executable instructions. When executed (for example, by one or more processors), the software can perform the operations of any one of the cell balancing methods described in the above embodiments.

The processor 1301 implements any one of the cell balancing methods in the above embodiments by reading and executing computer program instructions stored in the memory 1302.

In an example, the electronic device 1300 may further include a communication interface 1303 and a bus 1310. As shown in FIG. 13, the processor 1301, the memory 1302, and the communication interface 1303 are connected by the bus 1310 and communicate with each other.

The communication interface 1303 is primarily used for implementing communication between various modules, apparatuses, units, and/or devices in some embodiments of this application.

The bus 1310 includes hardware, software, or both, and is configured to couple the components of an online data traffic billing device together. By way of example and not limitation, the bus may include an Accelerated Graphics Port (AGP) or other graphics bus, an Enhanced Industry Standard Architecture (EISA) bus, a Front Side Bus (FSB), a HyperTransport (HT) interconnect, an Industry Standard Architecture (ISA) bus, an InfiniBand interconnect, a Low Pin Count (LPC) bus, a memory bus, a Micro Channel Architecture (MCA) bus, a Peripheral Component Interconnect (PCI) bus, a PCI-Express (PCI-X) bus, a Serial Advanced Technology Attachment (SATA) bus, a Video Electronics Standards Association Local Bus (VLB), or other suitable buses, or a combination of two or more thereof. Where appropriate, the bus 1310 may include one or more buses. Although some embodiments of this application have described and illustrated specific buses, this application considers any suitable buses or interconnections.

In addition, with reference to the cell balancing method in the above embodiments, an embodiment of this application can provide a computer storage medium for implementing the method. The computer storage medium stores a computer program instruction. When executed by a processor, the computer program instruction implements any one of the cell balancing methods in the above embodiments.

Definitely, this application is not limited to the specific configurations and processes described above and illustrated in the drawings. For brevity, a detailed description of the known method is omitted here. In the above embodiments, several specific steps are described and illustrated as examples. However, the method processes of this application are not limited to the specific steps described and illustrated. A person skilled in the art can make various changes, modifications, and additions, or change the order between the steps after understanding the concept of this application.

The functional blocks shown in the structural block diagram described above may be implemented as hardware, software, firmware, or a combination thereof. When implemented as hardware, the functional blocks may be, for example, an electronic circuit, an application-specific integrated circuit (ASIC), appropriate firmware, a plug-in, a function card, or the like. When implemented as software, the elements of this application are programs or code segments used for performing intended tasks. The program or code segments may be stored in a machine-readable medium, or transmitted over a transmission medium or communication link by means of a data signal carried in a carrier wave. "Machine-readable medium" may include any medium capable of storing or transmitting information. Examples of the machine-readable storage medium may include an electronic circuit, a semiconductor storage device, a read-only memory (ROM), a flash memory, an erasable ROM (EROM), a floppy disk, a CD-ROM, an optical disk, a hard disk, an optical fiber medium, a radio frequency (RF) link, and the like. The code segments may be downloaded from a computer network such as the Internet or an intranet.

It is also to be noted that the exemplary embodiments mentioned in this application describe some methods or systems based on a series of steps or apparatuses. However, this application is not limited to the order of the steps. In other words, the steps may be performed in the order mentioned in an embodiment hereof or in order different from the order mentioned in the embodiment, or several steps may be performed concurrently.

Various aspects of this application are described above with reference to the flowcharts and/or block diagrams of the methods, apparatuses (systems), and computer program products according to some embodiments of this application. Understandably, each box in the flowchart and/or block diagram and a combination of boxes in the flowchart and/or block diagram may be implemented by computer program instructions. The computer program instructions may be provided to a processor of a general-purpose computer, a special-purpose computer, or another programmable data processing device to produce a machine, such that the instructions, when executed by the processor of the computer or other programmable data processing devices, enable the implementation of the functions/actions specified in one or more boxes of the flowchart and/or block diagram. Such a processor may be, but is not limited to, a general-purpose processor, a special-purpose processor, an application-specific processor, or a field-programmable logic circuit. It is also understandable that each block in the block diagrams and/or flowcharts, and a combination of the blocks in the block diagrams and/or flowcharts, may also be implemented by dedicated hardware that performs the specified functions or actions, or may be implemented by a combination of dedicated hardware and computer instructions.

Described above are merely specific embodiments of this application. A person skilled in the art clearly understands that, for ease and brevity of description, a detailed working process of the above-mentioned systems, modules, and units may be learned with reference to a corresponding process described in the preceding method embodiments, the details of which are omitted here.

## Claims

1. A cell balancing device, **characterized in that**, the cell balancing device comprises:
a processing unit, configured to perform a first operation, wherein the first operation comprises:
obtaining a first minimum cell voltage value of a to-be-balanced battery module having a plurality of cells in a latest full-charging operation;
determining a first charge capacity of a first target cell in the battery module in a corresponding first time period in response to a first charging operation performed by the battery module; and
updating a balancing capacity of the first target cell based on the first charge capacity,
wherein, the first target cell is a cell with a voltage value greater than or equal to the first minimum cell voltage value when the battery module performs the first charging operation; and
the first time period corresponding to the first target cell is a period of time that begins when the voltage value of the first target cell reaches or exceeds the first minimum cell voltage value for a first time and that ends when the first charging operation of the battery module is ended, as counted throughout the first charging operation performed by the battery module.

2. The cell balancing device according to claim 1, **characterized in that** conditions for ending the first charging operation comprise at least one of the following conditions:
an electrical connection between the battery module and a charging device is disconnected;
the battery module reaches a charging cut-off SOC; or
the minimum cell voltage value of the battery module in the first charging operation is greater than or equal to the first minimum cell voltage value.

3. The cell balancing device according to claim 1 or 2, **characterized in that** the processing unit is configured to perform a second operation before performing the first operation, and the second operation comprises:
evaluating a number of consecutive times a charging cut-off SOC is less than or equal to a first SOC threshold, and determining whether the number of consecutive times is less than M in last N historical charging operations of the battery module; and
performing, the first operation in response to the number of consecutive times being less than M, wherein
both M and N are positive integers, and M is less than or equal to N.

4. The cell balancing device according to claim 3, **characterized in that** the processing unit is configured to
perform the first operation in response to a condition that the number of consecutive times is greater than or equal to M and that a SOC value of the battery module in a current charging operation is greater than the first SOC threshold.

5. The cell balancing device according to claim 3 or 4, **characterized in that** the processing unit is configured to
perform a third operation in response to a condition that the number of consecutive times is greater than or equal to M, and a condition that a SOC value of the battery module in a current charging operation is less than or equal to the first SOC threshold, and a condition that the battery module is in a static standing state; wherein the third operation comprises:
obtaining an open-circuit voltage value of a minimum cell and an open-circuit voltage value of a remaining cell in the battery module; and
calculating a balancing capacity of the remaining cell based on a SOC-OCV function, the open-circuit voltage value of the minimum cell, and the open-circuit voltage value of the remaining cell, so as to obtain an updated balancing capacity of the remaining cell,
wherein, the minimum cell is a cell with a lowest voltage in the battery module; and
the remaining cell is a cell other than the minimum cell in the battery module.

6. The cell balancing device according to any one of claims 3-5, **characterized in that** the processing unit is configured to
perform a fourth operation in response to a condition that the number of consecutive times is greater than or equal to M, and a condition that a SOC value of the battery module in a current charging operation is less than or equal to the first SOC threshold, and a condition that the battery module is in a charging state, and a condition that a fluctuation of a charging rate of the battery module is less than a fluctuation threshold; wherein the fourth operation comprises:
obtaining a second maximum cell voltage value of the battery module before the current charging operation;
determining a second charge capacity of a second target cell in the battery module in a corresponding second time period in response to a second charging operation performed by the battery module; and
updating a balancing capacity of the second target cell based on the second charge capacity,
wherein, the second target cell is a cell with a voltage value greater than or equal to the second maximum cell voltage value when the battery module performs the second charging operation; and
the second time period corresponding to the second target cell is a period of time that begins when the voltage value of the second target cell reaches or exceeds the second maximum cell voltage value for a first time and that ends when the second charging operation of the battery module is ended, as counted throughout the second charging operation performed by the battery module.

7. The cell balancing device according to claim 6, **characterized in that** conditions for ending the second charging operation comprise at least one of the following conditions:
an electrical connection between the battery module and a charging device is disconnected; or
the minimum cell voltage value of the battery module in the second charging operation is greater than or equal to the second maximum cell voltage value.

8. The cell balancing device according to any one of claims 4 to 7, **characterized in that** the cell balancing device comprises:
a plurality of balancing units, wherein a number of balancing units corresponds to a number of cells in the battery module, and each balancing unit comprises a resistor and a switch connected in series;
the plurality of balancing units are disposed on the processing unit, or, the plurality of balancing units are configured to be electrically connected between the plurality of cells of the battery module and the processing unit; and
the processing unit is configured to perform a fifth operation, wherein the fifth operation comprises:
performing a balancing operation on each cell that needs to be balanced, wherein the balancing operation is performed when the battery module is in a target state, and is performed based on a balancing capacity of the cell that needs to be balanced in the battery module, and is performed in response to a condition that the cell that needs to be balanced in the battery module satisfies a balancing operation condition;
the cell that needs to be balanced comprises: the first target cell, the remaining cell in the battery module, or the second target cell in the battery module;
the target state comprises at least one of: a charging state, a discharging state, or a static standing state; and
the balancing operation comprises: controlling a switch in a balancing unit to be turned on, wherein the balancing unit corresponds to the cell that needs to be balanced, and a resistor in the balancing unit consumes power of the cell that needs to step-down balancing .

9. The cell balancing device according to in any one of claims 1-8, **characterized in that** the fifth operation comprises:
updating, based on a balancing current and a balancing period of the balancing operation performed on the cell that needs to be balanced, a remaining balancing capacity of the cell that needs to be balanced;
wherein the balancing operation condition comprises at least one of the following conditions:
a temperature of the cell that needs to be balanced is less than a first temperature threshold;
a temperature of a resistor in a balancing unit corresponding to the cell that needs to be balanced is less than a second temperature threshold;
a voltage of the cell that needs to be balanced is greater than a voltage threshold; or
the remaining balancing capacity of the cell that needs to be balanced is greater than 0.

10. A cell balancing method, **characterized in that** the cell balancing method comprises:
obtaining a first minimum cell voltage value of a to-be-balanced battery module having a plurality of cells in a latest full-charging operation;
determining a first charge capacity of a first target cell in the battery module in a corresponding first time period in response to a first charging operation performed by the battery module; and
updating a balancing capacity of the first target cell based on the first charge capacity, wherein, the first target cell is a cell with a voltage value greater than or equal to the first minimum cell voltage value when the battery module performs the first charging operation; and
the first time period corresponding to the first target cell is a period of time that begins when the voltage value of the first target cell reaches or exceeds the first minimum cell voltage value for a first time and that ends when the first charging operation of the battery module is ended, as counted throughout the first charging operation performed by the battery module.
wherein conditions for ending the first charging operation comprise at least one of the following conditions:
an electrical connection between the battery module and a charging device is disconnected;
the battery module reaches a charging cut-off SOC; or
the minimum cell voltage value of the battery module in the first charging operation is greater than or equal to the first minimum cell voltage value.

11. The cell balancing method according to claim 10, **characterized in that**, before obtaining the first minimum cell voltage value and the first maximum cell voltage value of the to-be-balanced battery module in the latest full-charging operation, the method further comprises:
evaluating a number of consecutive times a charging cut-off SOC is less than or equal to a first SOC threshold, and determining whether the number of consecutive times is less than M in last N historical charging operations of the battery module; and
the obtaining the first minimum cell voltage value and the first maximum cell voltage value of the to-be-balanced battery module in the latest full-charging operation comprises:
obtaining, in response to the number of consecutive times being less than M, the first minimum cell voltage value and the first maximum cell voltage value of the to-be-balanced battery module in the latest full-charging operation, wherein
both M and N are positive integers, and M is less than or equal to N;
or
obtaining, in response to a condition that the number of consecutive times is greater than or equal to M and a condition that a SOC value of the battery module in a current charging operation is greater than the first SOC threshold, the first minimum cell voltage value and the first maximum cell voltage value of the to-be-balanced battery module in the latest full-charging operation.

12. The cell balancing method according to claim 11, **characterized in that** the method comprises:
obtaining an open-circuit voltage value of a minimum cell and an open-circuit voltage value of a remaining cell in the battery module in response to a condition that the number of consecutive times is greater than or equal to M, and a condition that a SOC value of the battery module in a current charging operation is less than or equal to the first SOC threshold, and a condition that the battery module is in a static standing state; and
calculating a balancing capacity of the remaining cell based on a SOC-OCV function, the open-circuit voltage value of the minimum cell, and the open-circuit voltage value of the remaining cell, so as to obtain an updated balancing capacity of the remaining cell,
wherein, the minimum cell is a cell with a lowest voltage in the battery module; and
the remaining cell is a cell other than the minimum cell in the battery module;
or
obtaining a second maximum cell voltage value of the battery module before a current charging operation in response to a condition that the number of consecutive times is greater than or equal to M, and a condition that a SOC value of the battery module in the current charging operation is less than or equal to the first SOC threshold, and a condition that the battery module is in a charging state, and a condition that a fluctuation of a charging rate of the battery module is less than a fluctuation threshold;
determining a second charge capacity of a second target cell in the battery module in a corresponding second time period in response to a second charging operation performed by the battery module; and
updating a balancing capacity of the second target cell based on the second charge capacity,
wherein, the second target cell is a cell with a voltage value greater than or equal to the second maximum cell voltage value when the battery module performs the second charging operation; and
the second time period corresponding to the second target cell is a period of time that begins when the voltage value of the second target cell reaches or exceeds the second maximum cell voltage value for a first time and that ends when the second charging operation of the battery module is ended, as counted throughout the second charging operation performed by the battery module.

13. The cell balancing method according to claim 12, **characterized in that** conditions for ending the second charging operation comprise at least one of the following conditions:
an electrical connection between the battery module and a charging device is disconnected; or
the minimum cell voltage value of the battery module in the second charging operation is greater than or equal to the second maximum cell voltage value.

14. The cell balancing method according to claim 12 or 13, **characterized in that** the method comprises:
performing a balancing operation on each cell that needs to be balanced, wherein the balancing operation is performed when the battery module is in a target state, and is performed based on a balancing capacity of the cell that needs to be balanced in the battery module, and is performed in response to a condition that the cell that needs to be balanced in the battery module satisfies a balancing operation condition;
the cell that needs to be balanced comprises: the first target cell, the remaining cell in the battery module, or the second target cell in the battery module;
the target state comprises at least one of: a charging state, a discharging state, or a static standing state; and
the balancing operation comprises: controlling a switch in a balancing unit to become turned on, wherein the balancing unit corresponds to the cell that needs to be balanced, and a resistor in the balancing unit consumes power of the cell that needs to step-down balancing.

15. The cell balancing method according to any one of claims 10-14, **characterized in that** the method comprises:
updating, for each cell that needs to be balanced, a remaining balancing capacity of the cell that needs to be balanced, wherein the update is performed based on a balancing current and a balancing period of the balancing operation performed on the cell that needs to be balanced, and the update is performed after the balancing operation is performed on the cell that needs to be balanced;
wherein the balancing operation condition comprises at least one of the following conditions:
a temperature of the cell that needs to be balanced is less than a first temperature threshold;
a temperature of a resistor in a balancing unit corresponding to the cell that needs to be balanced is less than a second temperature threshold;
a voltage of the cell that needs to be balanced is greater than a voltage threshold; or
the remaining balancing capacity of the cell that needs to be balanced is greater than 0.
